Europäisches Patentamt

European Patent Office

Office européen des brevets

(19)

(11) **EP 1 442 276 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(21) Anmeldenummer: 02774709.6

(22) Anmeldetag: **12.10.2002**

(51) Int Cl.⁷: **G01L 9/00**, G01L 19/04

(86) Internationale Anmeldenummer:
**PCT/EP2002/011442**

(87) Internationale Veröffentlichungsnummer:
**WO 2003/034015 (24.04.2003 Gazette 2003/17)**

(54) **DRUCKMESSAUFNEHMER MIT TRENNMEMBRAN UND TEMPERATURKOMPENSATION**

MANOMETRIC SENSOR WITH SEPARATING MEMBRANE AND TEMPERATURE COMPENSATION

CAPTEUR MANOMETRIQUE A MEMBRANE DE SEPARATION ET A COMPENSATION DE TEMPERATURE

(84) Benannte Vertragsstaaten:
**AT BE BG CH CY CZ DE DK EE ES FI FR GB GR IE IT LI LU MC NL PT SE SK TR**

(30) Priorität: **17.10.2001 DE 10150691**

(43) Veröffentlichungstag der Anmeldung:
**04.08.2004 Patentblatt 2004/32**

(73) Patentinhaber: **Endress + Hauser GmbH + Co. KG**
**79689 Maulburg (DE)**

(72) Erfinder: **WOEST, Wolfgang**
**79618 Rheinfelden (DE)**

(56) Entgegenhaltungen:
**EP-A- 0 764 839          DE-A- 3 037 412**
**US-A- 5 760 310**

**Beschreibung**

Die Erfindung bezieht sich auf Druckmeßaufnehmer mit einer Trennmembran. Genauer betrifft die Erfindung Druckmeßaufnehmer, bei denen der Einfluß temperaturbedingter Auslenkungen der Trennmembran auf die Druckmessung kompensiert wird.

Ein gattungsgemäßer Druckmeßaufnehmer zum Erfassen eines Drucks in einem ersten Medium umfasst eine Druckmeßzelle zur Erzeugung eines druckabhängigen Signals; eine Trennmembran, die mit ihrem Rand an einem Trennkörper befestigt ist, wobei die Trennmembran auf ihrer ersten, dem Trennkörper abgewandten Oberfläche mit dem in dem ersten Medium vorherrschenden Druck beaufschlagbar ist, und mit ihrer zweiten dem Trennkörper zugewandten Oberfläche und dem Trennkörper eine Druckkammer bildet, die mit einem Übertragungsmedium befüllt ist, wobei ferner die Druckkammer eine Öffnung aufweist, durch welche der interne Druck in der Druckkammer $p_{int}$ mittels des Übertragungsmediums über eine Druckzuleitung zu der Druckmeßzelle übertragen wird.

Die Trennmembran ist ein elastisches Bauelement, dessen Auslenkung d aus der Gleichgewichtslage von einem Druckunterschied $\sigma p$ zwischen dem internen Druck $p_{int}$ und dem externen Druck $p_{ext}$ im Prozeßmediumum bewirkt wird, d.h. $d = d(p_{int} - p_{ext})$.

Unter dem Gesichtspunkt der Meßgenauigkeit geht daher die Auslenkung d der Trennmembran mit einem Meßfehler $\sigma p$ einher, denn die Druckmeßzelle mißt den Innendruck $p_{int}$ anstelle des eigentlich interessierenden externen Drucks $p_{ext}$. Der Meßfehler hängt von den elastischen Eigenschaften $\varepsilon$ bzw. der Steifigkeit der Trennmembran ab: $\sigma p = \sigma p(d,\varepsilon)$. Wenngleich die Trennmembran eine möglichst geringe Steifigkeit aufweist, damit der interne Druck $p_{int}$ im Übertragungsmedium mit dem externen Druck $p_{ext}$ im Prozeßmediumum möglichst gut übereinstimmt, ist der Einfluß der elastischen Eigenschaften der Trennmembran auf den internen Druck jedoch zumindest bei großen Auslenkungen der Trennmembran nicht mehr vernachlässigbar.

Große Auslenkungen der Trennmembran ergeben sich hauptsächlich wegen der Volumenschwankungen des Übertragungsmediums aufgrund von Temperaturschwankungen. Das druckempfindliche Element einer Druckmeßzelle ist gewöhnlich um ein vielfaches steifer, als die Trennmembran, so daß temperaturbedingte Volumenänderungen des Übertragungsmediums im wesentlichen vollständig in dem variablen Volumen der Druckkammer, d.h. unmittelbar unter der Trennmembran, aufgenommen werden. Eine Druckbeaufschlagung des Druckmeßaufnehmers bewirkt aufgrund der Steifigkeit des druckempfindlichen Elements der Druckmeßzelle und aufgrund der Inkompressibilität des Übertragungsmediums eine vergleichsweise vernachlässigbare Auslenkung der Trennmembran. Der Meßfehler $\sigma p(d)$ kann somit in erster Näherung als

Funktion einer Temperaturänderung $\Delta T$ des Übertragungsmediums beschrieben werden, $\sigma p = \sigma p(\Delta T)$.

Hierzu offenbart Schleiferböck in der europäischen Patentanmeldung 0 764 839 A1 ein Druck- oder Differenzdruckmeßgerät, bei dem der von der Druckmeßzelle gemessene Druckwert p bzw der Differenzdruckwert $\Delta p$ für jede der Trennmembranen um einen Wert $\sigma p(\Delta T)$ korrigiert wird. Als Temperaturwert $\Delta T$ wird dazu das integrierte Temperaturprofil des Übertragungsmediums in der Druckzuleitung anhand des elektrischen Widerstands eines Drahtes ermittelt, der entlang der Druckzuleitung geführt ist. Diesem Temperaturwert $\Delta T$ wird dann ein Meßfehler $\sigma p$ zugeordnet, mit dem der gemessene Druckfehler korrigiert wird. Schleiferböcks Ansatz ist insofern brauchbar, als er inhomogene Temperaturverteilungen erfaßt, die in der Praxis häufig auftreten. Es ist aber nicht möglich, auf Veränderungen im Druckmeßgerät zu reagieren, wie zum Beispiel eine Veränderung des Leitungsvolumens durch extreme Krümmungen bzw. Knicke in der Druckzuleitung. Zudem ist der Anteil der Übertragungsflüssigkeit in der Druckkammer variabel, so daß es unmöglich ist, mit einer integrierten Widerstands- bzw. Temperaturmessung, die Volumenänderung der Übertragungsflüssigkeit exakt zu ermitteln, da die integrierte Messung von einer zeitlich konstanten und homogenen Verteilung der Übertragungsflüssigkeit auf die Längenabschnitte des parallel geführten Widerstandsdrahts ausgeht.

Es ist daher die Aufgabe der vorliegenden Erfindung, einen Druckmeßaufnehmer mit einer verbesserten Temperaturkompensation bereitzustellen.

Diese Aufgabe wird erfindungsgemäß gelöst durch die Vorrichtung gemäß unabhängigen Patentanspruch 1. Weitere Gesichtspunkte und Vorteile der Erfindung ergeben sich aus den abhängigen Patentansprüchen, der Beschreibung und den Zeichnungen.

Der erfindungsgemäße Druckmeßaufnehmer zum Erfassen eines Drucks in einem ersten Medium umfaßt eine Druckmeßzelle, zur Erzeugung eines druckabhängigen Signals; einen Trennkörper; eine Trennmembran, die mit ihrem Rand an dem Trennkörper befestigt ist, wobei die Trennmembran auf ihrer ersten, dem Trennkörper abgewandten Oberfläche mit dem in dem ersten Medium vorherrschenden Druck beaufschlagbar ist, und mit ihrer zweiten, dem Trennkörper zugewandten Oberfläche und dem Trennkörper eine Druckkammer bildet, die mit einem Übertragungsmedium befüllt ist, wobei die Druckkammer eine Druckkammeröffnung aufweist, durch welche sie mit der Druckmeßzelle in Fließverbindung steht; einen Sensor zur Ermittlung der Position der Trennmembran; und eine Auswertungseinheit, welche das von der Druckmeßzelle erzeugte Signal um einen Meßfehler $\sigma p$ korrigiert, der von der Position der Trennmembran abhängt.

Die Position der Trennmembran ist ein Maß für deren Auslenkung. Sie wird vorzugsweise anhand des Abstands zwischen einem Bereich der Trennmembran

und dem Trennkörper bzw. einem bezüglich des Trennkörpers festen Bezugspunkt ermittelt. Der Bezugspunkt kann bevorzugt im Bereich eines Membranbetts liegen, welches in einer Stirnseite des Trennkörpers ausgebildet sein kann, und an welchem die Trennmembran bei einem Druck außerhalb des Nennbereiches anliegen kann.

Als Sensor zur Ermittlung des Abstands zwischen dem Trennkörper und der Trennmembran wird vorzugsweise ein kapazitiver Sensor oder ein Ultraschallsensor eingesetzt. Gleichermaßen sind andere Abstandssensoren, insbesondere induktive, resistive und optische Sensoren geeignet.

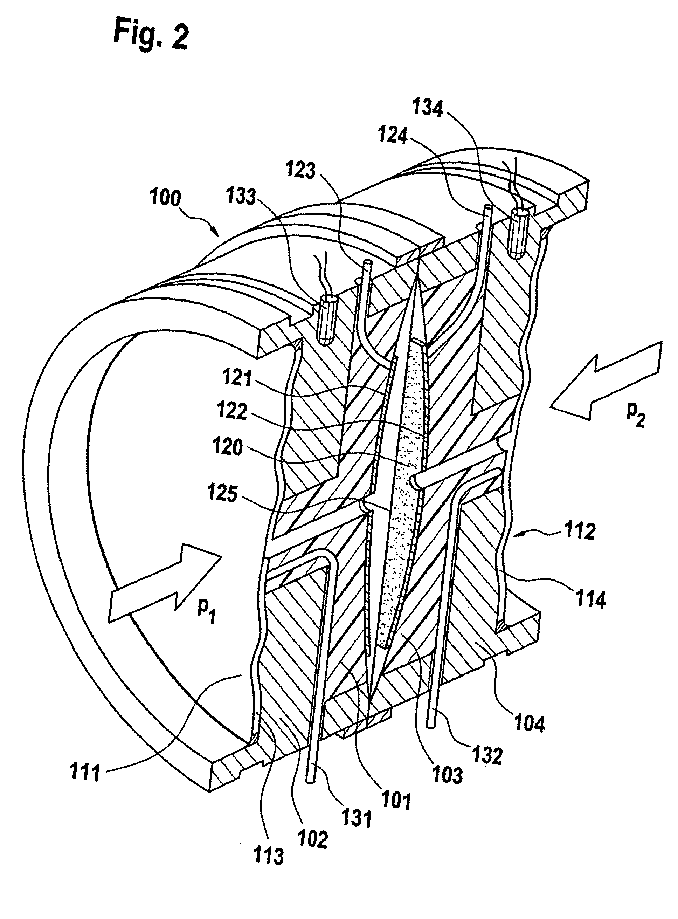

Stanley et al. offenbaren im US Patent No. 5,760,310 einen Druckmeßaufnehmer, genauer gesagt einen Differenzdruckmeßaufnehmer, bei dem der Membranabstand zum Membranbett kapazitiv oder über die Laufzeit eines Ultraschallsignals bestimmt wird. Der gemessene Membranabstand wird mit einem aufgrund einer Temperaturmessung erwarteten Membranabstand verglichen. Wenn die beiden Abstandswerte widersprüchlich sind, wird dies als Hinweis auf ein Leck in der Trennmembran interpretiert, woraufhin ein Warnsignal ausgegeben wird. Die bei Stanley et al. erwähnten Sensoren zur Abstandsmessung sind auch für die vorliegende Erfindung geeignet. Wegen Einzelheiten der Abstandssensoren wird auf die Figuren 2, 4, 5, und 10 von Stanley et al. sowie die entsprechenden Beschreibungsabschnitte in Spalte 4, Zeilen 1 bis 23; Spalte 5, Zeilen 30 - 54; Spalte 6, Zeilen 15 - 43; und Spalte 7, Zeile 65 - Spalte 8, Zeile 30 verwiesen. Die an den genannten Stellen beschriebenen Anordnungen der Abstandssensoren können ohne wesentliche Änderungen zur Realisierung der gegenwärtigen Erfindung übernommen werden.

Das Ergebnis einer Abstandsmessung wird erfindungsgemäß an eine Auswertungseinheit ausgegeben, dem ermittelten Abstand der Trennmembran einen Meßfehler $\sigma p$ zuordnet. Hierzu umfaßt die Druckmeßvorrichtung vorzugsweise Speichermittel, in denen eine charakteristische Kennlinie der Membran in geeigneter Weise abgelegt ist. Dies kann in Form von Wertetabellen erfolgen, in denen einem Auslenkungswert ein Meßfehler $\sigma p$ zugeordnet ist, oder die Koeffizienten einer linearen Funktion oder einer Funktion höherer Ordnung werden in dem Speichermittel abgelegt, wobei die Funktion den Meßfehler $\sigma p$ in Abhängigkeit vom Abstand beschreibt.

Zur Ermittlung des Zusammenhangs zwischen der Auslenkung der Trennmembran und dem Meßfehler $\sigma p$ kann beispielsweise beim Befüllen des Druckmeßgerätes bzw. der Druckkammer mit der Übertragungsflüssigkeit der Innendruck an der Druckmeßzelle in Abhängigkeit von dem Signal des Abstandssensors aufgezeichnet werden, wobei hierzu die Füllmenge so variiert wird, daß der Innendruck für alle möglichen Auslenkungen der Trennmembran erfaßt werden kann, bevor die Druckkammer mit einer Befüllung verschlossen wird, bei der sich die Trennmembran am Arbeitspunkt befindet.

Insofern als die Trennmembran aus einem anderen Material hergestellt sein kann als der Trennkörper, an dem sie befestigt ist, können die unterschliedlichen Wärmeausdehnungskoeffizienten der Materialien bewirken, daß die Kennlinie des Meßfehlers $\sigma p$ als Funktion des Membranabstands eine Temperaturabhängigkeit aufweist. Temperaturabhängige Kennlinien können aber unter Umständen auch dann auftreten, wenn die Trennmembran und der Trennkörper aus dem gleichen Material bestehen. Um einer Temperaturabhängigkeit der Kennlinie - aus welchen Gründen auch immer - Rechnung zu tragen, weist eine weitere Ausführungsform des erfindungsgemäßen Druckmeßaufnehmers zusätzlich mindestens einen Temperatursensor auf, der die Temperatur eines Meßpunkts erfaßt, die es ermöglicht, die Temperaturabhängigkeit der Kennlinie bei der Bestimmung des Meßfehlers $\sigma p$ zu berücksichtigen. Der Meßpunkt kann beispielsweise im Trennkörper in der Nähe der Trennmembran, an der Trennmembran, oder im Volumen der Druckkammer angeordnet sein. Im letzten Fall wird die Temperatur des Übertragungsmediums herangezogen, um den Temperatureinfluß auf die $\sigma p(d)$-Kennlinie zu berücksichtigen.

Es versteht sich für den Fachmann von selbst, daß bei einem Differenzdruckmeßaufnehmer mit zwei Trennmembranen zur Bestimmung der Druckdifferenz $\Delta p_{ext}$ zwischen einem ersten Medium und einem zweiten Medium für beide Trennmembran eine Abstandsmessung erforderlich ist, um für jede Trennmembran einen separaten Meßfehler $\sigma p_1$ bzw. $\sigma p_2$ zu bestimmen und damit den an der Druckmeßzelle des Differenzdruckmeßaufnehmers anstehenden internen Differenzdruck $\Delta p_{int}$ zu korrigieren.

Die Erfindung wird anhand der nachfolgenden Zeichnungen näher erläutert. Es zeigt:

Fig. 1: eine Schnittzeichnung durch einen Differenzdruckmeßaufnehmer gemäß der vorliegenden Erfindung;

Fig. 2: eine perspektivische Darstellung einer zweiten Ausführungsform eines Erfindungsgemäßen Differenzdruckaufnehmers;

Fig. 3: ein Flußdiagramm zur Fehlerkorrektur bei einer Absolutdruckmessung;

Fig. 4: ein Flußdiagramm zur Fehlerkorrektur bei einer Differenzdruckmessung; und

Fig. 5: eine Prinzipskizze zur Ermittlung des verformungsabhängigen Meßfehlers.

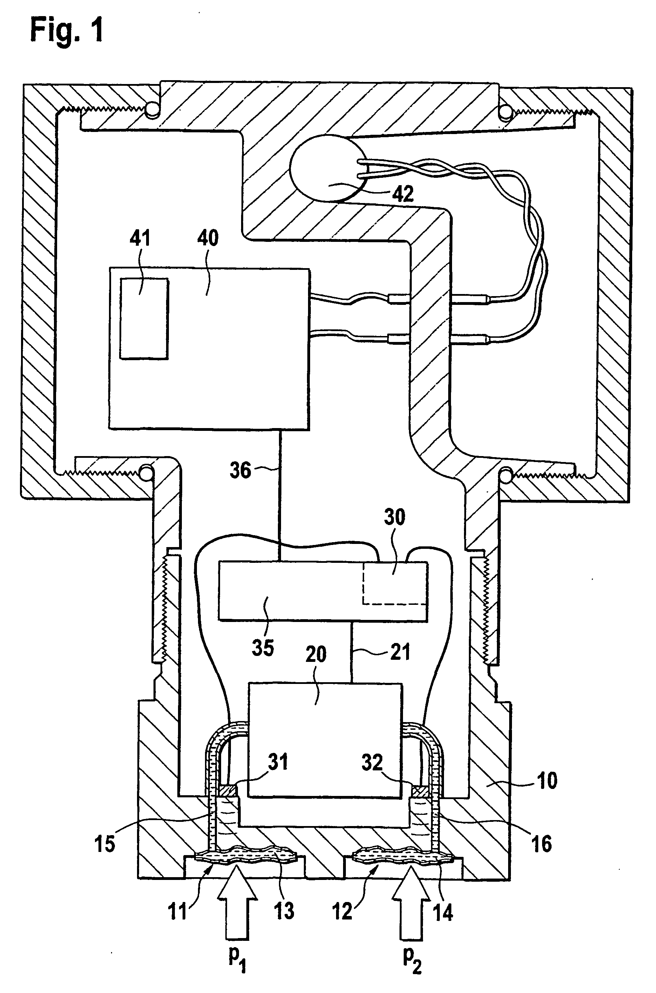

Fig. 1 zeigt einen Druckmeßaufnehmer gemäß der vorliegenden Erfindung, in diesem Falle einen Differenzdruckmeßaufnehmer. Der Trennkörper 10 dieses Differenzdruckmeßaufnehmers weist an seiner Stirnseite zwei koplanar angeordnete Trennmembranen 11, 12 auf die mit einem ersten externen Druck $p_1$ bzw. einem zweiten externen Druck $p_2$ beaufschlagbar sind.

Die erste Trennmembran 11 verschließt eine erste Druckkammer 13 im Trennkörper, und die zweite Trennmembran 12 verschließt eine zweite Druckkammer 14 im Trennkörper. Die Druckkammern werden jeweils von der Trennmembran und einem in der Stirnfläche des Trennkörpers ausgebildeten Membranbett begrenzt. Die Druckkammern sind mit einem Übertragungsmedium, vorzugseise einem Hydrauliköl gefüllt. Von den beiden Druckkammern erstreckt sich jeweils eine ebenfalls mit dem Übertragungsmedium gefüllte erste 15 bzw. eine zweite 16 Druckzuleitung zu einer Differenzdruckmeßzelle, die über die Druckzuleitungen mit dem in der ersten Druckkammer 13 vorherrschenden Druck $p_{1int}$ und dem in der zweiten Druckkkammer 14 vorherrschenden Druck $p_{2int}$ einander entgegenwirkend beaufschlagt wird. Das Ausgabesignal der Druckmeßzelle ist ein Maß für die interne Druckdifferenz $\Delta p_{int} = p_{1int} - p_{2int}$, welches über die Meßzellenleitung 21 zu einer Vorprozessorplatine 35 ausgegeben wird. Die Vorprozessorplatine 35 ist über Vorprozessorleitung 36 mit der Hauptplatine verbunden, auf welcher der auszugebende Meßwert ggf. nach weiteren Korrekturen in ein 4 - 20 mA-Signal gewandelt wird, d.H. der Versorgungsstrom des Druckmeßwandlers an dem Versorgungsanschluß 42 wird in Abhängigkeit des Meßsignals auf 4 - 20 mA geregelt. Die Hauptplatine weist zudem ein sogenanntes HART-Modem auf, welches eine digitale Kommunikation mit dem Druckmeßwandler ermöglicht. Abgesehen von beschriebenen analogen Meßwertausgabe über die Stromregelung können also auf dem Versorgungsstrom weitere digitale Eingabe- und Ausgabesignale aufmoduliert sein, um beispielsweise den Druckmeßwandler zu programmieren oder Zustandsmeldungen des Druckmeßwandlers abzufragen. Die Art der Meßwertausgabe und der Kommunikation ist für die vorliegende Erfindung im einzelnen unbeachtlich. Folglich kann neben der beschriebenen Form der Kommunikation mittels eines HART-Modems die vorliegende Erfindung mit jeder anderen gängigen Kommunikationsform wie dem PROFIBUS- oder dem FIELDBUS-Standard realisiert werden. Ggf. kann abgesehen von der Meßwertausgabe auf weitere Kommunikation verzichtet werden.

Zur Ermittlung der aktuellen Positionen der ersten Trennmembran ist hinter der ersten Druckkammer 13, d.h. einer von der ersten Trennmembran 11 abgewandten Oberfläche des Trennkörpers 10 ein erster Ultraschallwandler 31 angeordet, dessen gepulstes Ultraschallsignal sich vorzugsweise im wesentlichen senkrecht zur Ebene der Trennmembran 11 ausbreitet. Der Ultraschallwandler 31 empfängt zumindest zwei Echos, nämlich zuerst ein Echo von dem Membranbett und anschließend ein Echo von der ersten Trennmembran 11. Der zeitliche Abstand der beiden Echos ist ein Maß für den Abstand der ersten Trennmembran von dem Membranbett. Hinter der der zweiten Druckkammer 14 ist entsprechend ein Ultraschallwandler 32 angeordnet, mit dessen Hilfe die aktuelle Position der zweiten Trennmembran 12 ermittelt wird. Beide Ultraschallwandler 31, 32 werden von einer Steuerschaltung 30 gesteuert, und ausgewertet, die bevorzugt auf der Vorprozessorplatine 35 angeordnet ist.

Die verwendeten Ultraschallfrequenzen liegen bevorzugt zwischen 1 und 50 MHz. Geeignete Ultraschallwandler sind u.a. erhältlich als Moldell V208-RM von Panametrics Inc. Waltham, Mass., USA. Anstelle von Ultraschallwandlern können auch Piezo-Filmelemente verwendet werden, wie sie u.a. von AMP, Inc., Valley Forge, Pa., USA erhältlich sind.

Soweit die Temperatur der Übertragungsflüssigkeit mit einem optionalen Temperatursensor ermittelt wird, kann die Temperaturabhängigkeit der Ausbreitungsgeschwindigkeit des Ultraschallsignals in der Übertragungsflüssigkeit bei dem oben beschriebenen Laufzeitverfahren zur Bestimmung der Trennmembranposition zur Verbesserung der Genauigkeit berücksichtigt werden.

Von der Vorprozessorplatine 35 werden Signale zur Hauptplatine übertragen, die jeweils die Positionen der ersten Trennmembran 11 bzw. der zweiten Trennmembran 12 repräsentieren. Anhand der Positionssignale für die beiden Trennmembranen werden die Meßfehler $\sigma p_1(d_1)$ und $\sigma p_2(d_2)$ aufgrund der Membranpositionen $d_1$ und $d_2$ ermittelt.

Hierzu wird entweder der jeweils einem Positionssignal zugeordnete Korrekturwert aus einer Tabelle abgelesen, die in einem permanenten Speicherelement abgelegt ist, oder der Korrekturwert $\sigma p_1$ bzw. $\sigma p_2$ wird anhand des jeweiligen Positionssignals sowie in dem Speicherelement abgelegter Koeffizienten berechnet.

Der interessierende Messwert, d.h. die externe Druckdifferenz $\Delta p_{ext}$ ergibt sich schließlich durch Subtraktion der Differenz der Korrekturterme von der internen Druckdifferenz:

$$\Delta p_{ext} = \Delta p_{int} - [\sigma p_1(d_1) - \sigma p_2(d_2)]$$

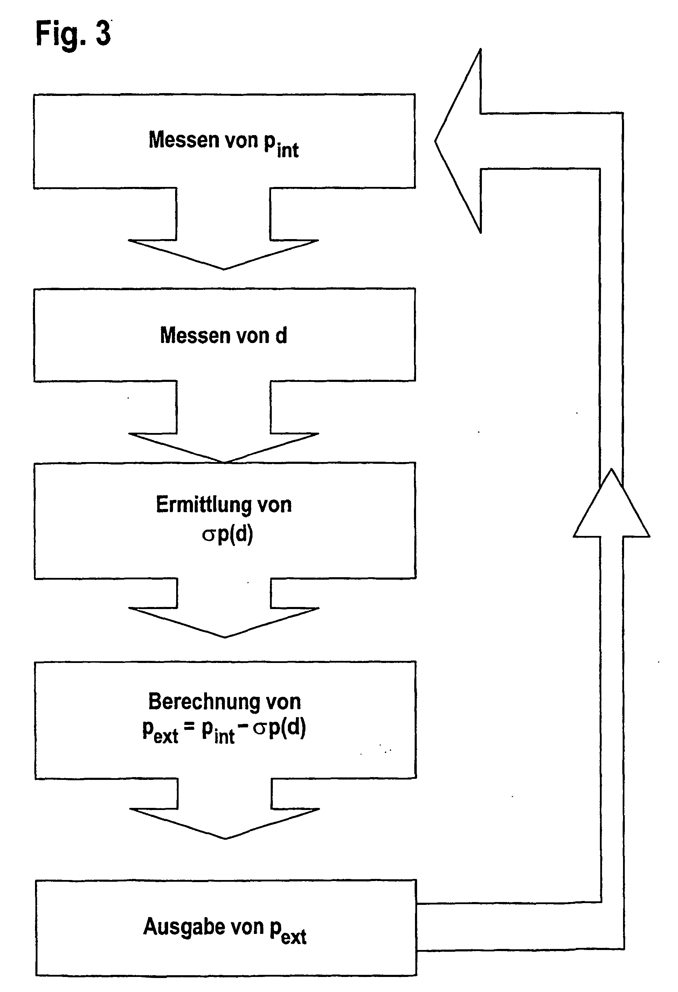

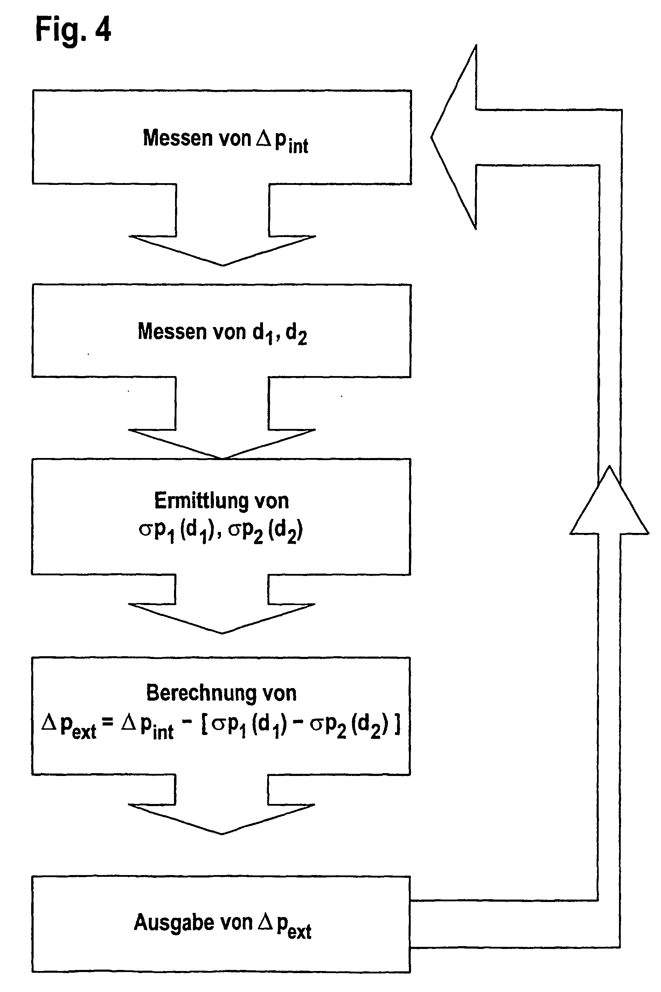

Ein erfindungsgemäßer Ablauf zur Bestimmung der tatsächlichen externen Druckdifferenz ist in Fig. 4 zusamenfassend dargestellt. Ein entsprechendes Schema für einen Absolutdruckmeßumformer bzw. Relativdruckmeßumformer mit nur einer Trennmembran ist in Fig. 3 dargestellt. Insofern als in diesem Fall nur eine Trennmembran vorhanden ist, wird auch nur ein abstandsabhängiger Messfehler $\sigma p(d)$ bestimmt, mit dem der von einer Druckmeßzelle gemessene interne Druck $p_{int}$ korrigiert wird, um den externen Absolutdruck bzw. Relativdruck zu erhalten:

$$p_{ext} = p_{int} - \sigma p(d)$$

Fig. 2 zeigt eine andere Ausführungsform eines erfindungsgemäßen Differenzdruckmeßaufnehmers mit einem zylindrischen Grundkörper 100, der an beiden Stirnseiten jeweils einen integrierten Trennkörper 102, 104 aufweist, in dem jeweils ein Membranbett ausgebildet ist. Über den beiden Membranbetten ist jeweils eine Trennmembran 111, 112 druckdicht befestigt, wodurch zwischen den beiden Membranbett und der zugehörigen Trennmembran jeweils eine Druckkammer 113, 114 ausgebildet wird.

Die beiden Druckkammern 113, 114 kommunizieren jeweils über einen Kanal mit einer zentralen Meßzellenkammer 120, die durch eine Meßmembran 125 in zwei Hälften getrennt ist. Die Druckkammern 113, 114 und die Meßzellenkammer sind mit einem Übertragungsmedium, insbesondere einem Hydrauliköl gefüllt, über welches die Meßmembran 125 entgegenwirkend mit dem internen Druck der beiden Druckkammern beaufschlagt wird.

Der Druckmeßaufnehmer weist weiterhin zwei Isolatoreinsätze 101, 103 auf, welche vorzugsweise jeweils zumindest einen Teilabschnitt eines Membranbetts und einen Teilabschnitt einer Wand der zentralen Meßzellenkammer 120 bilden. Die beiden Kanäle zur Herstellung der Fließverbindung zwischen den beiden Druckkammern 113, 114 und der zentralen Meßzellenkammer 120 sind vorzugsweise jeweils in den beiden Isolatoreinsätzen 101, 103 ausgebildet.

Der erste Isolatoreinsatz 101 weist auf dem Teilabschnitt einer ersten Wand der zentralen Meßzellenkammer 120 eine erste Gegenelektrode 121 auf, die mit einem ersten Gegenelektrodenanschluß 123, an der Mantelfläche des Grundkörpers 100 verbunden ist, und der zweite Isolatoreinsatz 103 weist auf dem Teilabschnitt einer zweiten Wand der zentralen Meßzellenkammer 120 eine zweite Gegenelektrode 122 auf, die mit einem zweiten Gegenelektrodenanschluß 124 an der Mantelfläche des Grundkörpers 100 verbunden ist. Die Meßmembran 125 dient als druckabhängige variable Meßelektrode zu beiden Gegenelektroden. Durch Vergleich der Kapazitäten zwischen der Meßelektrode und den beiden Gegenelektroden kann in bekannter Weise die interne Druckdifferenz $\Delta P_{int}$ ermittelt werden.

Die Bestimmung der Trennmembranenposition erfolgt bei dieser Ausführungsform kapazitiv. Hierzu ist in beiden Membranbetten jeweils eine von der Umgebung isolierte Elektrode 131,132 vorgesehen, wobei es sich anbietet die Elektroden in den Isolatoreinsätzen 101, 103 anzuordnen. Die jeweilige Kapazität zwischen den beiden Elektroden 131, 132 und ihrer Umgebung ist ein Indikator für den Abstand der jeweiligen Trennmembran 111, 112. Die Ermittlung der Meßfehler $\sigma p_1$ und $\sigma p_2$ erfolgt anhand der beiden Kapazitäten nach der Vorgehensweise von Fig. 4, die im Zusammenhang mit dem ersten Ausführungsbeispiel ausführlich diskutiert wurde.

Optional weist der Differenzdruckmeßumformer zwei Temperaturfühler 133, 134. auf, von denen vorzugsweise jeweils einer in den beiden Trennkörpern 102, 104 in der Nähe des jeweiligen Membranbetts angeordnet sind. Anhand der ermittelten Temperaturwerte kann bei der Ermittlung der Meßfehler $\sigma p_1$ und $\sigma p_2$ eine Temperaturabhängigkeit der Membrankennlinien berücksichtigt werden.

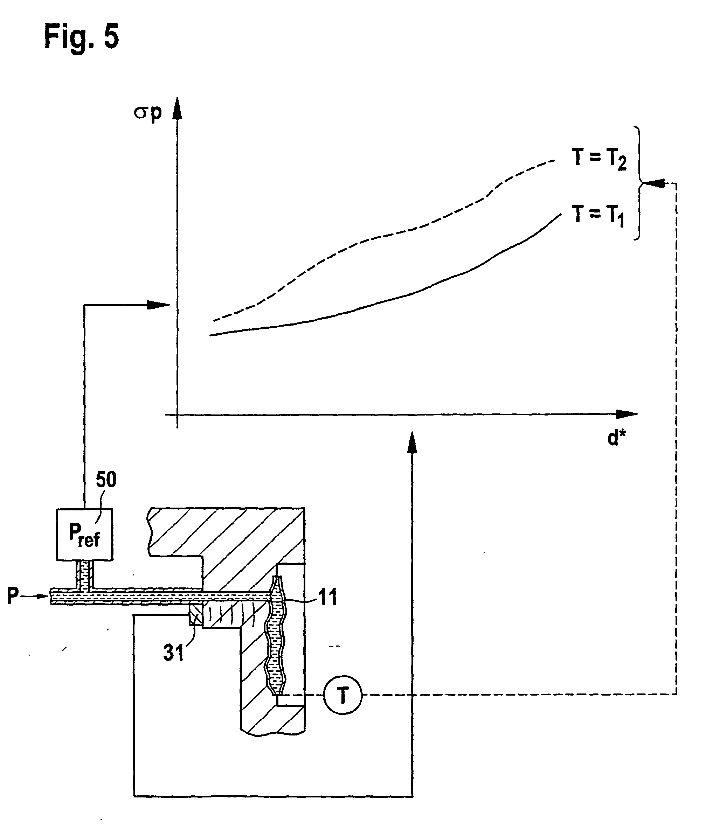

Eine bevorzugte Vorgehensweise zur Ermittlung der Membrankennlinien wird nun anhand von Fig. 5 beschrieben. Soweit eine individuelle Ermittlung der Kennlinie für jede Trennmembran nach der Montage erforderlich ist, kann dies zweckmäßig beim Befüllen der jeweiligen Druckkammer mit dem Übertragungsmedium erfolgen. Hierzu wird der Befüllungsdruck P wird über einen sinnvollen Wertebereich in geeigneter Schrittweite variiert. Bei jedem Schritt wird das Signal d* eines Abstandssensors - hier des Ultraschallwandlers 31 - aufgezeichnet, welches die Auslenkung d der Trennmembran repräsentiert. Dem Signalwert d wird ein Meßfehler $\sigma p(d)$ zugeordnet, der beispielsweise mittels eines vorübergehend angeschlossenen Relativdrucksensors 50 ermittelt wird. Hierbei ist es selbstverständlich, daß die Außenseite der Trennmembran und die Referenzseite des Relativdrucksensors dem gleichen Druck ausgesetzt sein müssen. Die so ermittelte Kennlinie wird entweder in Tabellenform in einem Speicherelement abgelegt, oder die Koeffizienten Funktion, welche die Kennlinie wiedergibt, werden ermittelt und im Speicherelement abgelegt. Im Meßbetrieb wird dann entsprechend entweder das einem d* zugeordnete $\sigma p$ (d*) aus der Tabelle ausgelesen, oder das $\sigma p(d*)$ wird anhand von d und den gespeicherten Koeffizienten berechnet.

Sofern die Kennlinie der Trennmembran eine starke Temperaturabhängigkeit aufweist, kann bei Ausführungsformen mit einem geeigneten Temperatursensor eine Kennlinie für verschiedene Temperaturen aufgenommen werden, wie mit der gestrichelten Linie in Fig. 5 angedeutet ist.

Hierzu kann der oben beschriebene Vorgang bei verschiedenen Temperaturen durchgeführt werden. Die Kennlinien für verschiedene Temperaturen werden entweder tabellarisch im Speicherelement abgelegt werden, oder die ermittelte Temperturabhängigkeit der Kennlinie $\sigma p(d*)$ kann ggf. durch eine geeignete Funktion zweier Variablen beschrieben werden:

$$\sigma p = \sigma p(d^*, T)$$

Sofern die Trennmembranen mit hinreichend geringer Streuung der Kennlinien herstellbar und über einem Membranbett montierbar sind, kann ggf. auf eine individuelle Ermittlung der Kennlinien am fertig montierten Druckmeßwandlers verzichtet werden.

Zu diesem Zweck können die Trennmembranen beispielsweise auf einem Montagering vorzugsweise durch Verschweißen vormontiert werden. Die solchermaßen vormontierten Module aus Trennmembran und Montagering sind unter Umständen einfacher und reproduzierbarer über einem Membranbett montierbar, so daß eine Ermittlung der Kennlinie nach der Montage ggf. nicht mehr erforderlich ist. Sofern die Variabilität der Kennlinien zwischen verschiedenen Modulen hinreichend gering ist, kann auf eine individuelle Ermittlung der Kennlinien ggf. ganz verzichtet werden. Anderenfalls kann die Kennlinienermittlung für die Module bereits vor der Montage am Druckmeßwandler erfolgen.

**Patentansprüche**

1. Druckmeßaufnehmer, umfassend
   eine Druckmeßzelle (20), zur Erzeugung eines druckabhängigen Signals;
   mindestens eine Trennmembran (11, 12), die mit ihrem Rand an einem Trennkörper (10) befestigt ist, wobei die Trennmembran (11, 12) auf ihrer ersten, dem Trennkörper (10) abgewandten Oberfläche mit dem in einem ersten Medium vorherrschenden Druck beaufschlagbar ist, und mit ihrer zweiten, dem Trennkörper (10) zugewandten Oberfläche und dem Trennkörper (10) eine Druckkammer (13, 14) bildet, die mit einem Übertragungsmedium befüllt ist, wobei die Druckkammer (13, 14) eine Öffnung aufweist, durch welche sie mit der Druckmeßzelle (20) in Fließverbindung steht;
   mindestens einen Sensor (31, 32) zur Ermittlung der Position der Trennmembran (11, 12); und
   eine Auswertungseinheit (40), welche den von der Druckmeßzelle (20) gemessenen Druckwert um einen Korrekturwert verändert, der von der Position der Trennmembran (11, 12) abhängt.

2. Druckmeßaufnehmer nach Anspruch 1, wobei der der Sensor ein kapazitiver Sensor ist, der den Abstand zwischen dem Trennkörper und der Trennmembran bestimmt.

3. Druckaufnehmer nach Anspruch 1, wobei der Sensor ein induktiver Sensor ist.

4. Druckaufnehmer nach Anspruch 1, wobei der Sensor ein Ultraschallsensor ist oder ein optischer Sensor ist.

5. Druckaufnehmer nach einem der vorhergehenden Ansprüche, wobei der Korrekturwert zusätzlich von der Temperatur der Trennmembran und/oder des Trennkörpers abhängt.

6. Druckaufnehmer nach einem der vorhergehenden Ansprüche, weiterhin umfassend ein Speicherelement, in welchem die Korrekturwerte in Abhängigkeit von der Position der Trennmembran tabellarisch gespeichert sind, und zur Veränderung des Druckmeßzellensignals von der Auswerteeinheit auslesbar sind.

7. Druckaufnehmer nach Anspruch 6, wobei die Auswerteeinheit den Korrekturwert für Positionen, von denen kein Tabellenwert vorliegt durch Interpolation geeigneter Tabellenwerte ermittelt.

8. Druckmeßaufnehmer nach einem der Ansprüche 1 -5, weiterhin umfassend ein Speicherelement, in welchem die Koeffizienten einer linearen Funktion oder einer Funktion höherer Ordnung gespeichert sind, um den Korrekturwert als Funktion der Position der Trennmembran zu berechnen.

9. Druckmeßaufnehmer nach einem der vorhergehenden Ansprüche, wobei der Druckmeßaufnehmer ein Differenzdruckmeßaufnehmer zur Messung der Druckdifferenz zwischen dem Druck in dem ersten Medium und einem Druck in einem zweiten Medium ist, der zwei Trennmembranen, zwei Druckkkammern, und zwei Sensoren aufweist, wobei die erste Trennmembran mit dem ersten Druck und die zweite Trennmembran mit dem zweiten Druck beaufschlagbar ist.

**Claims**

1. A pressure-metering detector, including
   a pressure-metering cell (20) for generating a signal dependent on pressure;
   at least one partition membrane (11, 12) which is secured at its edge to a partition element (10), wherein the pressure prevailing in a first medium can act on the partition membrane (11, 12) at its first surface, that remote from the partition element (10), and wherein the partition membrane (11, 12) forms both with its second surface, that facing the partition element (10), and with the partition element (10) a pressure chamber (13, 14) filled with a transmission medium, and wherein the pressure chamber (13, 14) has an aperture through which it is in flow communication with the pressure-metering cell (20);
   at least one sensor (31, 32) for determining the position of the partition membrane (11, 12); and
   an evaluating unit (40) which alters the pressure value measured by the pressure-metering cell (20) by a correction value dependent on the position of the partition membrane (11, 12).

2. A pressure-metering detector according to Claim 1, in which the sensor is a capacitive sensor which determines the spacing between the partition element and the partition membrane.

3. A pressure-metering detector according to Claim 1, in which the sensor is an inductive sensor.

**4.** A pressure-metering detector according to Claim 1, in which the sensor is an ultrasound sensor or an optical sensor.

**5.** A pressure-metering detector according to one of the preceding claims, in which the correction value is additionally dependent on the temperature of the partition membrane and/or of the partition element.

**6.** A pressure-metering detector according to one of the preceding claims, furthermore including a storage element in which the correction values are stored in a table in dependence on the position of the partition membrane, and may be read off to alter the pressure-metering cell signal from the evaluating unit.

**7.** A pressure-metering detector according to Claim 6, in which the evaluating unit determines the correction value for positions for which there is no value in the table, by interpolating suitable table values.

**8.** A pressure-metering detector according to one of Claims 1 to 5, furthermore including a storage element in which the coefficients of a linear function or a higher-order function are stored in order to calculate the correction value as a function of the position of the partition membrane.

**9.** A pressure-metering detector according to one of the preceding claims, in which the pressure-metering detector is a differential pressure-metering detector for measuring the pressure difference between the pressure in the first medium and a pressure in a second medium which has two partition membranes, two pressure chambers and two sensors, in which it is possible for the first pressure to act on the first partition membrane and the second pressure to act on the second partition membrane.

**Revendications**

**1.** Capteur de mesure de pression, comprenant une cellule de mesure de pression (20) destiné à produire un signal dépendant de la pression ; au moins une membrane de séparation (11, 12) qui est fixée avec son bord sur un corps de séparation (10) ; la membrane de séparation (11, 12) pouvant être appliquée sur sa première surface détournée du corps de séparation par la pression régnant dans le premier agent, et forme avec sa deuxième surface orientée vers le corps de séparation et le corps de séparation, une chambre de pression qui est remplie par un agent de transmission ; la chambre de pression (13, 14) présentant une ouverture à travers laquelle elle se trouve en liaison de circulation avec la cellule de mesure de pression (20) ;

au moins un capteur (31, 32) destiné à la transmission de la position de la membrane de séparation (11, 12) ; et une unité d'évaluation (40) qui modifie la valeur de pression mesurée par la cellule de mesure de pression (20) selon une valeur de correction qui dépend de la position de la membrane de séparation (11, 12).

**2.** Capteur de mesure de pression selon la revendication 1 ; où le capteur est un capteur capacitif qui détermine la distance entre le corps de séparation et la membrane de séparation.

**3.** Capteur de mesure de pression selon la revendication 1 ; où le capteur est un capteur à induction.

**4.** Capteur de mesure de pression selon la revendication 1 ; où le capteur est un capteur à ultrasons ou un capteur optique.

**5.** Capteur de mesure de pression selon une des revendications précédentes ; où la valeur de correction dépend en plus de la température de la membrane de séparation et/ou du corps de séparation.

**6.** Capteur de mesure de pression selon une des revendications précédentes, comprenant en outre, un élément de stockage dans lequel les valeurs de correction sont stockées en fonction de la position de la membrane de séparation sous forme de tableau, et sont susceptibles d'être lues pour modifier le signal des cellules de mesure de pression à partir de l'unité d'évaluation.

**7.** Capteur de mesure de pression selon la revendication 6 ; l'unité d'évaluation transmettant la valeur de correction pour les positions n'ayant pas de valeur tabulaire par l'interpolation de valeurs tabulaires appropriées.

**8.** Capteur de mesure de pression selon une des revendications 1-5, comprenant en outre, un élément de stockage dans lequel les coefficients d'une fonction linéaire ou d'une fonction d'un ordre supérieur sont stockées afin de calculer la valeur de correction comme fonction de la position de la membrane de séparation.

**9.** Capteur de mesure de pression selon une des revendications précédentes ; où le capteur de mesure de pression est un capteur de mesure de pression différentielle destiné à mesurer la différence de pression entre la pression dans le premier agent et une pression dans le deuxième agent qui présente deux membranes de séparation, deux chambres de pression, et deux capteurs ; la première membrane de séparation étant appliquée de la première pression et la deuxième membrane de séparation étant appliquée avec la deuxième pression.

# Fig. 1

# Fig. 2

# Fig. 3

Messen von $p_{int}$

Messen von d

Ermittlung von
$\sigma p(d)$

Berechnung von
$p_{ext} = p_{int} - \sigma p(d)$

Ausgabe von $p_{ext}$

# Fig. 4

```
┌─────────────────────────────────┐
│      Messen von △ p_int          │
└─────────────────────────────────┘
               │
               ▼
┌─────────────────────────────────┐
│      Messen von d₁, d₂           │
└─────────────────────────────────┘
               │
               ▼
┌─────────────────────────────────┐
│        Ermittlung von            │
│    σp₁ (d₁),  σp₂ (d₂)           │
└─────────────────────────────────┘
               │
               ▼
┌─────────────────────────────────┐
│        Berechnung von            │
│  △ p_ext = △ p_int − [σp₁(d₁) − σp₂(d₂)] │
└─────────────────────────────────┘
               │
               ▼
┌─────────────────────────────────┐
│      Ausgabe von △ p_ext         │
└─────────────────────────────────┘
```

Messen von $\triangle p_{int}$

Messen von $d_1$, $d_2$

Ermittlung von
$\sigma p_1 (d_1)$, $\sigma p_2 (d_2)$

Berechnung von
$\triangle p_{ext} = \triangle p_{int} - [\sigma p_1 (d_1) - \sigma p_2 (d_2)]$

Ausgabe von $\triangle p_{ext}$

# Fig. 5